# FASCICULE DE BREVET EUROPEEN

(11) **EP 3 194 310 B1**
(45) Date de publication et mention de la délivrance du brevet: **27.11.2019**
(21) Numéro de dépôt: 15770815.7
(22) Date de dépôt: 27.08.2015
(51) Int. Cl.: B65G 47/14, B65G 27/02

(54) **DISPOSITIF D'INDIVIDUALISATION D'OBJETS EN VRAC DE PETITE TAILLE**
VORRICHTUNG ZUR TRENNUNG VON KLEINEN LOSEN OBJEKTEN
DEVICE FOR SEPARATING SMALL LOOSE OBJECTS

(30) Priorité: 02.09.2014 FR 1458199
(43) Date de publication de la demande: 26.07.2017
(73) Titulaire: Expertise Vision, 74300 Thyez (FR)
(72) Inventeur: BASSY, Emmanuel, F-74300 Thyez (FR)
(74) Mandataire: Croonenbroek, Thomas Jakob
(86) Numéro de dépôt international: PCT/EP2015/069694
(87) Numéro de publication internationale: WO 2016/034500

(56) Documents cités:
- EP-A1- 0 806 382
- WO-A2-01/38202
- CH-A- 356 654
- JP-A- H0 639 762
- JP-U- H0 713 828
- US-A- 4 487 338
- US-A- 5 853 078
- US-A1- 2013 284 755
- US-B1- 6 315 103

## Description

La présente invention concerne un dispositif d'individualisation d'objets en vrac de taille millimétrique, une installation d'alimentation d'une machine d'objets de petite taille, notamment millimétrique, et un procédé d'individualisation d'objets en vrac de petite taille.

Dans l'industrie, par exemple mécanique, électronique ou agroalimentaire, on connaît divers systèmes d'alimentation d'objets en vrac qui sont utilisés dans de nombreuses applications.

Parmi ceux-ci, le plus répandu reste à ce jour les systèmes dits « à bols vibrants ».

Dans ces systèmes, le bol possède en son centre une zone de réception d'objets en vrac. Depuis le centre, un tel bol comprend une rampe hélicoïdale permettant par des vibrations d'acheminer les pièces une à une hors du bol et de les orienter par des moyens de guidage pour les présenter à une entrée d'une machine d'assemblage par exemple.

Bien que ces bols soient très répandus, ils présentent néanmoins de nombreux inconvénients.

En effet, du fait de la vibration permanente du bol nécessaire à l'acheminement des objets, ces bols sont une source de bruits très importante et difficile à maîtriser étant donné qu'aussi bien les objets que les bols sont souvent en métal de sorte que l'entrechoquement entre les pièces et le bol est inévitable et génère un bruit considérable.

Souvent par ailleurs, une machine d'assemblage doit être alimentée par plusieurs bols vibrants en même temps, d'où une multiplication des sources de bruit.

De plus, un bol vibrant est généralement conçu pour un objet spécifique ce qui engendre un coût de conception important pour garantir le bon acheminement des objets et rend le bol vibrant inopérant pour des objets pour lesquels il n'est pas conçu. Il manque donc de polyvalence.

On connaît du document JPH0639762 et US 5 853 078 un bol vibrant qui est combiné à un bras robotisé de préhension. EP 0 806 382 divulgue un dispositif d'individualisation d'objets en vrac de petite taille comprenant un plateau de réception d'objets en vrac, le plateau comprenant un bord périphérique de retenu et une surface de réception qui est au niveau du bord plus élevé que vers le centre du plateau, la surface de réception du plateau étant en pente du bord périphérique vers le centre du plateau, ainsi qu'un moteur d'entraînement du plateau pour entraîner le plateau en rotation pour déplacer les objets par la force centrifuge en direction du bord périphérique.

En outre, plus les objets à individualiser sont petits, plus la conception d'un bol vibrant est difficile et plus souvent on constate des dysfonctionnements, comme par exemple dans l'orientation des pièces ou en ce qui concerne la cadence d'alimentation qui ne peut pas être assurée. De plus, il peut arriver qu'un corps étranger soit parmi les pièces à individualiser, par exemple des copeaux, des débouchures etc, ce qui peut conduire à des coincements du bol vibrant.

Par ailleurs, pour certaines pièces de grande précision ou fragiles, les vibrations et l'entrechoquement des pièces peuvent altérer la qualité des pièces et notamment leur état de surface.

On connaît aussi du document EP 916 457 une installation avec un bras robotisé avec une membrane vibrante permettant de bouger les pièces déposée sur la surface pour les individualiser. Toutefois, cette solution est lente et ne permet pas l'alimentation à une cadence élevée d'une autre machine étant donné qu'il faut d'abord individualiser au moins une pièce, puis la localiser avec son orientation pour pouvoir la saisir.

La présente invention vise à résoudre au moins partiellement un ou plusieurs des problèmes décrits ci-dessus en proposant un dispositif d'individualisation d'objets en vrac qui soit polyvalent, moins bruyant et rapide. Les documents WO03/104116 et EP1897663 décrivent des installations analogues travaillant sur le même principe et présentant les mêmes inconvénients.

A cet effet, l'invention propose un dispositif d'individualisation d'objets en vrac de petite taille selon la revendication 1.

Le dispositif selon l'invention se distingue en particulier par sa polyvalence et sa fiabilité de fonctionnement. Il ne génère que peu de bruit est peu encombrant et facilement à nettoyer. De plus, on peut facilement enlever toutes les pièces à individualiser en cas de besoin.

L'invention peut présenter une ou plusieurs des caractéristiques suivantes prises seules ou en combinaison :

La structuration d'orientation de la surface de réception comprend par exemple des nervures radiales.

Ces nervures radiales présentent par exemple toutes le même profil de hauteur de crête.

Selon une variante, la surface de réception présente de façon régulière des nervures radiales principales et des nervures radiales secondaires prises entre deux nervures radiales principales, les nervures radiales principales présentant au niveau du bord une hauteur de crête plus importante que les nervures radiales secondaires.

Deux nervures radiales secondaires peuvent être prises entre deux nervures radiales principales.

Selon un autre aspect, les nervures présentent un profil triangulaire en section transversale.

Selon un autre mode de réalisation, la structuration d'orientation de la surface de réception comprend une structure en gradins circulaires.

La surface des gradins est par exemple inclinée vers le centre du plateau.

La hauteur de la marche des gradins est notamment inférieure à la hauteur du centre de gravité des objets à individualiser.

Selon encore un autre mode de réalisation, la structuration d'orientation de la surface de réception comprend des secteurs circulaires inclinés perpendiculairement à une direction radiale de sorte que deux secteurs adjacents sont reliés par une marche radiale.

Selon un autre aspect, le dispositif, en particulier le plateau, comprend un bord circulaire interne délimitant une zone centrale destinée à la fixation du plateau à un axe de sortie du moteur d'entraînement et ne recevant pas d'objet.

Selon encore un autre aspect, les rayons des secteurs circulaires partent de façon tangentielle du bord circulaire interne.

Dans le cas des objets allongés, le dispositif, notamment le plateau, comprend au niveau du bord périphérique des obstacles de hauteur plus importante que la hauteur des objets à individualiser pour permettre d'appliquer un moment de rotation aux objets allongés.

Ces obstacles sont par exemple formés par des déformations du bord périphérique.

Selon un autre aspect, l'unité de préhension robotisée des objets comprend une caméra et un bras robotisé linéaire pouvant se déplacer d'une part le long d'un rayon du plateau et d'autre part perpendiculairement au plateau.

L'invention concerne également une installation d'alimentation d'une machine en objets de petite taille selon la revendication 13.

L'invention concerne en outre un procédé d'individualisation d'objets en vrac de petite taille selon la revendication 14.

Selon un aspect, on applique une vibration asymétrique au plateau.

D'autres caractéristiques et avantages de l'invention ressortiront de la description suivante, donnée à titre d'exemple, sans caractère limitatif, au regard des dessins annexés sur lesquels :
- la figure 1 montre un schéma de principe en perspective d'un dispositif d'individualisation d'objets en vrac,
- la figure 2 est une vue de côté du dispositif de la figure 1,
- la figure 3 est une vue de dessus du dispositif de la figure 1, la figure 4 est une vue en perspective d'un plateau de réception en vrac d'objets selon un premier mode de réalisation,
- la figure 5 est une vue partielle en coupe transversale des nervures du plateau de la figure 4,
- les figures 6A, 6B et 6C montrent des vues partielles de dessus d'un plateau de la figure 4 avec un objet pour illustrer le procédé selon l'invention,
- la figure 7A est une vue en perspective d'un plateau de réception en vrac d'objets selon un second mode de réalisation,
- la figure 7B est une vue partielle en coupe transversale des nervures du plateau de la figure 7A,
- la figure 8A est une vue en perspective d'un plateau de réception en vrac d'objets selon un troisième mode de réalisation,
- la figure 8B est une vue partielle en coupe transversale des nervures du plateau de la figure 8A,
- la figure 8C est une vue partielle en coupe transversale d'une variante des nervures du plateau de la figure 8A,
- la figure 9 est une vue en perspective d'un plateau de réception en vrac d'objets selon un quatrième mode de réalisation,
- la figure 10 est une vue partielle de la figure 9 avec un objet positionné,
- la figure 11 est une vue en perspective d'un plateau de réception en vrac d'objets selon un cinquième mode de réalisation,
- la figure 12 est une vue de dessus du plateau de la figure 11, et
- la figure 13 est une vue en perspective d'un plateau de réception en vrac d'objets selon un sixième mode de réalisation.

Sur ces figures, les éléments identiques portent les mêmes numéros de référence.

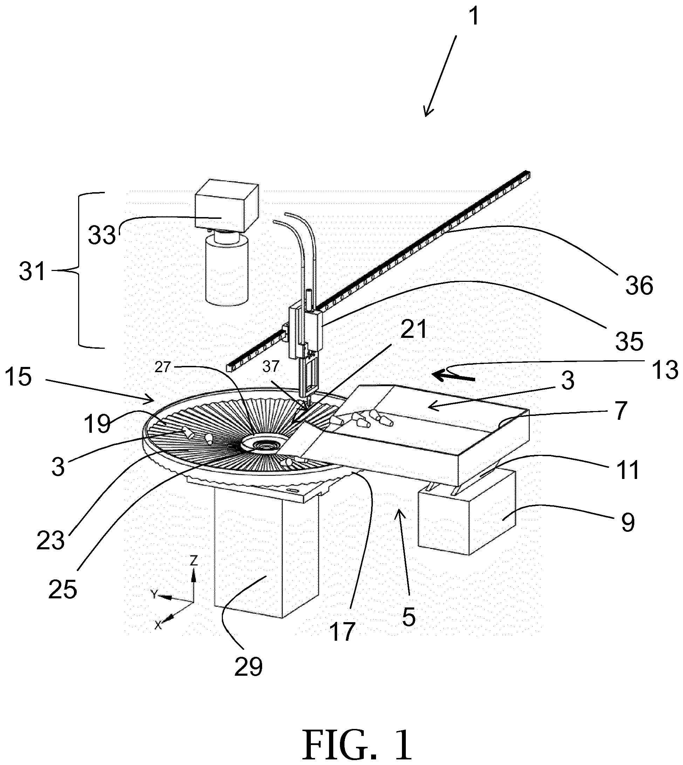

Les figures 1 à 3 montrent un dispositif 1 d'individualisation d'objets 3 en vrac de taille millimétrique.

Ainsi, le dispositif 1 est destiné à recevoir des pièces ou objets 3 en vrac, de forme et de poids sensiblement identiques pour un même lot et à fournir ces objets 3 un par un, notamment positionné et orientés de la même façon à une machine industrielle (non représentée) par exemple de montage ou encore de contrôle un à un des objets 3.

Ainsi, le dispositif 1 fait par exemple partie d'une installation d'alimentation d'une machine en objets de taille millimétriques.

Les objets 3 sont de petite taille, notamment millimétriques, c'est-à-dire ils mesurent généralement de 1mm environ à 100mm voire jusqu'à 300mm pour leur extension la plus longue.

Les objets 3 peuvent être en métal ou en plastique ou en bois, par exemple des pièces produites par usinage, par découpage, par injection ou en frappe. Ils peuvent être des produits semi-finis ou des composants (connecteurs, composants électroniques, pièce mécanique).

Ils possèdent notamment au moins une symétrie principale : axe de symétrie ou un plan de symétrie ou un centre de symétrie, ou encore un plan d'appui.

Sans restreindre le type d'objets 3 qui peuvent être individualisés par le dispositif 1 selon l'invention, on peut citer des objets de forme cylindriques (par exemple des tiges), des objets cylindriques cubiques dont le rapport longueur / diamètre est proche de l'unité, des objets coniques, tronconiques, des objets avec des épaulements (par exemple un axe avec un épaulement de plus grand diamètre sur une petite distance de l'axe), des objets présentant des gorges circonférentielles (par exemple deux disques reliés par un axe), des objets parallélépipédiques, des objets sphériques ou encore des objets courbes, même sans axe de symétrie.

De façon optionnelle, le dispositif 1 comprend une unité de stockage, comme par exemple une trémie 5 de stockage d'objets 3. Cette trémie 5 se compose par exemple d'une cuve 7 de remplissage recevant des objets 3 et d'un vibreur 9 relié par des lames 11 à la cuve 7 de façon à faire avancer les objets 3 vers une sortie (voir flèche 13).

En sortie de la cuve 7, les objets 3 tombent en vrac sur un plateau 15 de réception d'objets en vrac.

Comme on le voir sur les figures, le plateau 15 comprend un bord périphérique 17 de retenu et une surface de réception 19 des objets.

Au niveau du bord périphérique 17, la surface de réception 19 est à un niveau plus élevé que vers le centre 21 du plateau 15. Il en résulte, vue en coupe transversale, une forme généralement conique du plateau 3 surmonté par le bord périphérique 17. Le plateau 15 de réception possède donc une forme générale d'un disque conique / concave.

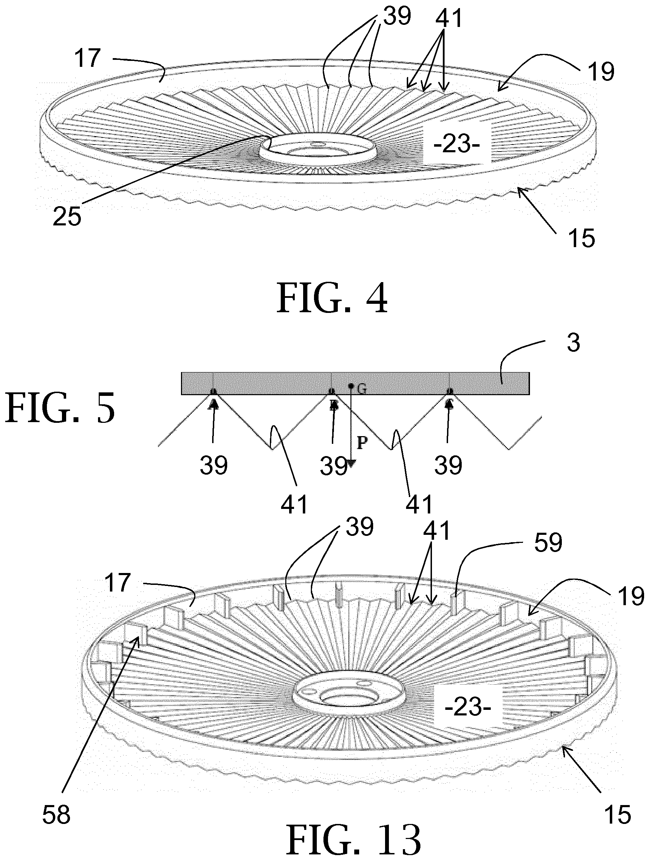

Comme on le voir sur les figures 1-3, mais encore mieux sur les figures 4 à 13, la surface de réception 19 du plateau 15 présente une structuration 23 d'orientation des objets qui sera détaillée plus loin en rapport avec les figures 4 à 13. Sur ces figures la structuration s'étend sur pratiquement sur toute la surface de réception 19, mais on peut envisager en variante que seulement une partie de la surface de réception 19 présente la structuration 23.

De plus, le plateau 15 comprend un bord circulaire interne 25 délimitant une zone centrale 27 destinée à la fixation du plateau 15 à un axe de sortie d'un moteur d'entraînement 29 et ne recevant pas d'objets 3.

Le moteur d'entraînement 29 du plateau 15 est conçu et a pour fonction d'entraîner le plateau 15 selon plusieurs modes dont au moins un mode en rotation pour déplacer les objets 3 par la force centrifuge en direction du bord périphérique afin de les disperser et un mode de vibration en particulier dans le plan x-y, c'est-à-dire autour de l'axe de rotation du plateau 15 circulaire. Lors d'un fonctionnement en vibration, les objets se placent par rapport à la structuration d'orientation 23. Pour la vibration pour des raisons de simplicités, on préfère des vibrations ou secousses rotatives symétriques ou asymétriques dans le plan x-y du plateau 25 ce qui simplifie la construction du moteur d'entraînement 29, mais des vibrations selon l'axe « z », c'est-à-dire perpendiculaire au plan défini par le plateau 15 peuvent également être envisagées.

Enfin, le dispositif 3 comprend une unité 31 de préhension robotisée des objets 3. Celle-ci se compose par exemple d'une caméra 33 et d'un bras robotisé linéaire 35, disposé par exemple sur un rail 36, pouvant se déplacer d'une part le long d'un rayon du plateau 15 et d'autre part perpendiculairement au plateau, selon l'axe « z », pour prendre les objets 3.

Selon une forme de réalisation, le bras 35 comporte à son extrémité un préhenseur 37, par exemple sous forme d'une pipette aspirante. Pour prendre les objets 3, la pipette peut par exemple avoir une forme un « V » avec un trou aspirant dans le fond du « V » ou par exemple une autre forme complémentaire à celle des objets 3 à saisir avec un ou plusieurs trous d'aspiration.

Selon d'autres variantes, le préhenseur 37 peut présenter une pince, un aimant (pour des objets ferromagnétiques), mais une préhension par des principes de capillarité ou par l'électricité statique sont également envisageables.

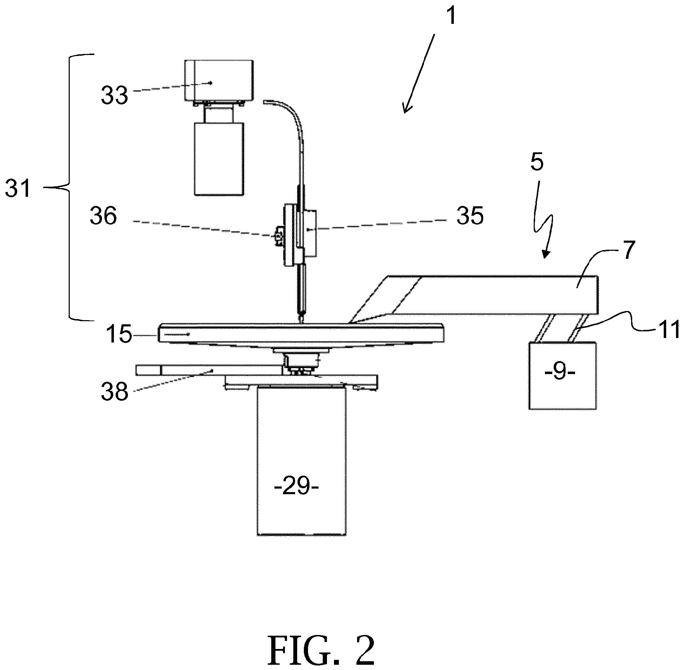

Par ailleurs, on prévoit dans un mode préférentiel que le plateau 15 est réalisé en une matière translucide ou transparente et qu'un rétroéclairage 38 (voir figure 2) est disposé sous le plateau 15 pour faciliter la détection des objets 3 par la caméra 33.

On décrira maintenant en détail le plateau 15 de réception des objets 3 en relation avec les figures 4 à 13.

Comme on le voit sur la figure 4, du fait de sa forme générale conique, la surface de réception 19 est en pente du bord périphérique 17 vers le centre 21 du plateau 15.

Selon le premier mode de réalisation sur les figures 4 et 5 qui est en particulier adapté aux objets cylindriques, légèrement coniques, la structuration d'orientation 23 de la surface de réception 19 comprend des nervures radiales 39 ayant une section transversale triangulaire (voir figure 5). C'est dans le creux, les sillons 41, entre deux nervures 39 que doivent se positionner les objets 3 pour être orientés de façon convenable pour être saisis par le préhenseur 37. Selon une variante non représentée, le fond des sillons 41 peut être semi-circulaire.

Selon l'exemple de la figure 4, les nervures radiales 39 présentent toutes le même profil d'hauteur de crête. Comme on voir sur la figure 4, cette hauteur de crête est maximale au niveau du bord périphérique 17 et diminue progressivement en direction du centre 21 du plateau 15, autrement dit, la hauteur de crête est la même à équidistance du centre du plateau 15 et diminue en se rapprochant du centre 21. Le fait que la hauteur de crête au niveau du centre est plus faible favorise l'étalement et le déplacement des objets vers le bord périphérique 17 par centrifugation.

Cette conception du plateau 15 découle du moins en partie des considérations suivantes.

La hauteur des nervures 39 (donc la structuration 23) et la profondeur des sillons 41 doivent être choisies de telle manière
1) qu'une rotation permet d'étaler les objets 3 et de les séparer les uns des autres,
2) qu'une rotation permet par la force centrifuge de les faire remonter la pente à l'encontre de la force gravitationnelle en direction du bord périphérique 17, et
3) qu'une vibration permet de placer et orienter les objets 3 dans les sillons 41, notamment proche du bord périphérique 17, entre deux nervures radiales 39 afin que les objets se trouvent dans une position stable d'orientation prédéfinie.

La structuration 23 du plateau 15 permet donc de bloquer au repos les objets 3 dans une position stable tout en permettant un déplacement des objets 3 lors de l'application d'une rotation ou d'une vibration.

Les objets 3, en fonction de leur forme et de leur orientation sur le plateau 15 peuvent donc glisser ou rouler par-dessus les nervures radiales 39 avant de se placer dans les sillons 41.

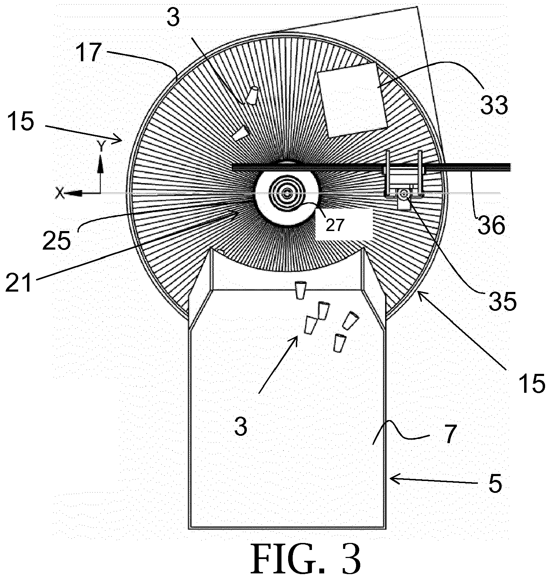

Comme on le voit sur la figure 3, on préfère que la zone de préhension des objets 3 se trouve près du bord périphérique 17 où la hauteur des nervures radiales 39 est la plus importante et la position des objets 3 dans les sillons 41 la plus stable.

Bien entendu, par l'intermédiaire de la caméra 33, on détermine lesquels des objets 3 sont correctement placés dans les sillons 41 et seuls les coordonnées des objets 3 correctement placés sont envoyées au bras robotisé 35 pour saisir les objets 3 et les délivrer par exemple à une machine de montage.

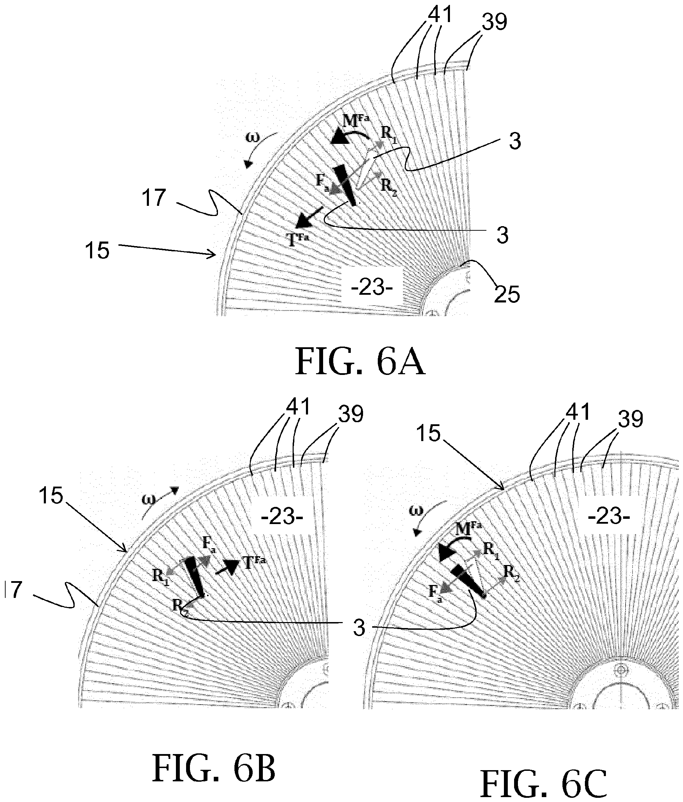

On va maintenant détailler le fonctionnement du dispositif d'individualisation 1 en relation avec les figures 6A-6C qui représentent un comportement possible d'un objet 3 de forme conique sur un plateau 15 à nervures radiales 39 et sillons 41 en « V ».

Sur les figures 6A à 6C, l'objet en blanc désigne la position de l'objet 3 sur le plateau 15 avant le déplacement et l'objet en noir la position après déplacement.

On considère donc que l'objet 3 a été déposé sur la surface de réception 19 en travers des nervures 39 (objet en blanc). A ce stade, l'objet 3 n'est donc pas bien positionné pour la saisie par l'unité 31 de préhension.

On applique une rotation avec une vitesse *ω* au plateau 15 pour placer et orienter l'objet 3 au moyen de la structuration d'orientation 23.

On considère une décélération forte. Une force Fa est alors générée lors des phases d'accélération et de décélération et s'applique globalement au centre de gravité.

Dans la première phase (figure 6A), on stoppe donc le plateau 15 brusquement lors de sa rotation pour générer une force Fa. L'objet 3 glisse sur les nervures 39 jusqu'à ce que la force de contact R2 devienne plus grande que R1, en heurtant une nervure 39 avec la pointe par exemple. On génère donc un mouvement de rotation MFa en plus du mouvement de translation TFa. En revanche, on n'a dans ce cas pas assez d'énergie pour placer directement l'objet 3 dans un sillon 41. Notons également qu'une partie de la rotation est effectuée naturellement du fait de la forme conique de l'objet 3 et de sa répartition de masse. La tête a plus d'inertie que la pointe et est donc plus facilement entraînée par sa masse en direction de Fa.

La seconde phase (figure 6B) correspond à un retour lent. L'accélération et la décélération sont plus faibles et la force Fa n'est pas assez grande pour créer un gros déplacement. L'objet 3 roule juste à cheval sur deux nervures 39.

La troisième phase (figure 6C) reprend les caractéristiques de la première, très dynamique. On génère également un couple MFa car R2 offre plus de résistance que R1. En effet le contact en R2 est créé par la butée de la pointe dans le fond du sillon 41 qui s'oppose à Fa. R1 correspond aux forces de frottement de l'objet 3 sur le sommet de la nervure 39, qui sont plus faibles que R2. On a un déséquilibre et la tête de l'objet 3 remonte le sillon 41 pour se placer dans le même que la pointe. L'objet 3 est alors orienté et stable.

Selon l'exemple décrit ci-dessus, la vibration / rotation appliquée peut être qualifiée d'asymétrique.

Puis, on saisit l'objet 3 ainsi orienté au moyen de l'unité 31 de préhension robotisée.

Lorsqu'il y a de nombreux objets 3 disposés en vrac sur le plateau 15, le procédé se déroule de la même façon.

En fonction de la position des objets 3, on applique éventuellement au préalable une rotation pour déplacer les objets 3 par la force centrifuge en direction du bord périphérique 17.

Une fois qu'il y a assez d'objets 3 dans une position orientée et stable, l'unité de préhension 31 saisit un à un les objets 3. Une fois qu'un sillon 41 est déchargé des objets 3, on applique une rotation lente au plateau 15 pour placer un autre sillon 41 contenant des objets 3 devant l'unité de préhension 31.

Puis on applique le cas échéant une vibration, ce qui a pour effet de placer les objets 3 étant à cheval entre deux nervures dans un sillon 41.

On comprend donc que le dispositif 1, de par sa construction simple, est peu onéreux. De plus les vibrations / rotations du plateau 15 ne génèrent pratiquement aucun bruit et le dispositif selon l'invention est silencieux.

Bien entendu, la structuration d'orientation 23 doit être adaptée aux objets 3 à individualiser. Toutefois, dans ce cas, un simple changement du plateau 15 avec une autre structuration d'orientation 23 suffit pour adapter le dispositif 1 à un autre type d'objet, ce qui est facile à faire et peu cher. Le dispositif 1 de l'invention se distingue donc également par une grande polyvalence.

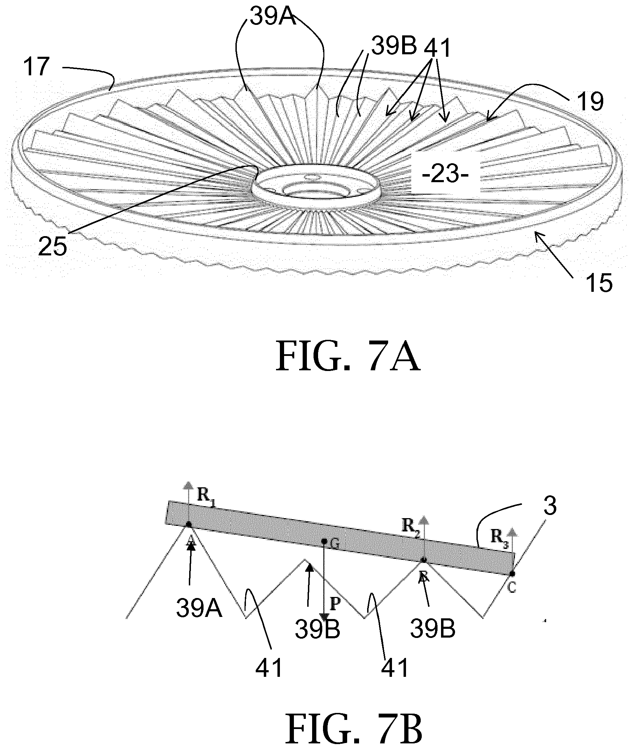

Les figures 7A et 7B montre un autre mode de réalisation d'un plateau 15.

Ce mode de réalisation se distingue de celui des figures précédentes par le fait que la surface de réception 19 présente comme structuration 23 de façon régulière des nervures radiales principales 39A et des nervures radiales secondaires 39B prises entre deux nervures radiales principales 39A. Les nervures radiales principales 39A présentent au niveau du bord périphérique 17 une hauteur de crête plus importante que les nervures radiales secondaires 39B.

Plus précisément sur la figure 7A, deux nervures radiales secondaires 39B sont pris entre deux nervures radiales principales 39A.

Cette structuration d'orientation 23 a pour conséquence que tous les objets 3 qui ne se trouvent pas orientés dans un sillon 41 sont en déséquilibre de sorte qu'un simple mouvement de rotation ou de vibration permet de faire bouger les objets 3 pour les placer correctement dans les sillons 41.

Bien entendu, on peut aussi avoir plus de nervures secondaires 39B prises entre deux nervures principales 39A ; le nombre de nervures secondaires 39B pris entre deux nervures principales 39A dépend essentiellement de la longueur des objets 3 afin que ceux-ci soient pratiquement toujours en déséquilibre sauf lorsqu'ils sont placés dans les sillons 41.

Par ailleurs, on note qu'en direction du centre 21, la hauteur de crête, aussi bien des nervures principales 39A que des nervures secondaires 39B, diminue pour être près du centre 21 la même.

Le fonctionnement du dispositif 1 avec ce type de plateau 15 est similaire à celui décrit précédemment.

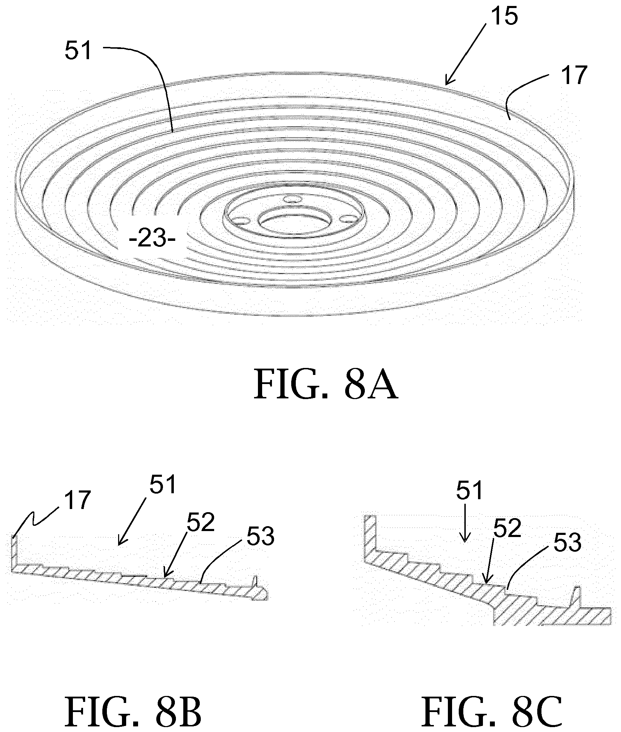

Les figures 8A, 8B et 8C ont trait à un troisième mode de réalisation du plateau 15.

Selon ce mode de réalisation, la structuration d'orientation 23 de la surface de réception 19 comprend une structure en gradins circulaires 51 formés de parties plates 52 et de marches 53 concentriques. La figure 8B montre une vue partielle en coupe transversale du plateau 15 de la figure 8A montrant une alternance de parties plates 52 et de marches 53, les parties plates 52 étant sensiblement horizontales.

Selon une variante montrée à la figure 8C, la partie plate 52 des gradins 51 est inclinée vers le centre 21 du plateau 15.

Pour ce mode de réalisation, le principe est d'une part, de déplacer les objets 3 contre les marches 53 en utilisant une vibration asymétrique, d'autre part, de les retourner en s'appuyant sur des marches.

Les marches 53 sont des cassures verticales servant à faire basculer un objet 3 afin de l'orienter dans une direction particulière, soit le basculement par chute soit le basculement par remonté.

A cet effet, la hauteur des marches 53 des gradins 51 est inférieure à la hauteur du centre de gravité des objets 3, justement pour permettre le basculement par remonté.

Le fonctionnement du dispositif 1 avec ce type de plateau 15 est similaire au fonctionnement décrit ci-dessus.

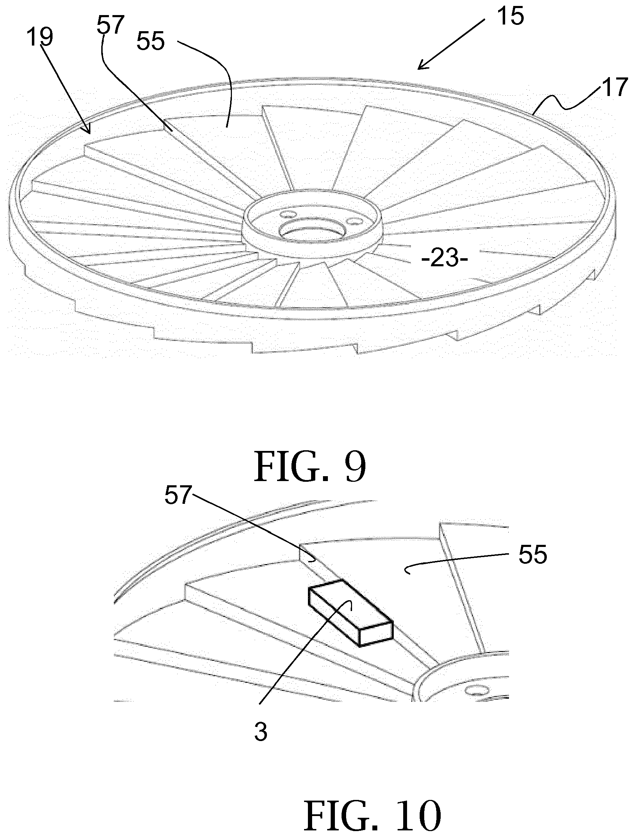

Les figures 9 et 10 ont trait à un quatrième mode de réalisation du plateau 15.

Selon ce quatrième mode de réalisation, la structuration d'orientation 23 de la surface de réception 19 comprend des secteurs circulaires 55 inclinés perpendiculairement à une direction radiale de sorte que deux secteurs adjacents 55 sont reliés par une marche radiale 57.

On a donc pour ce mode des secteurs circulaires 55 qui sont aussi bien inclinés radialement en direction du centre 21 (conicité du plateau 15) que dans le sens périphérique.

Ce plateau 15 à secteurs circulaires permet par exemple qu'un objet 3 cylindrique roule dans la pente et vienne se caler contre la marche radiale 57.

De plus, les objets coniques peuvent rouler en décrivant un cercle ce qui permet de les orienter dans la pente avant de se plaquer contre la marche radiale 57.

Comme on voit plus précisément sur la figure 10, la faible pente permet également de faire glisser un objet 3 parallélépipédique plat et de le caler contre la marche radiale 57. Dans ce cas, la largeur du secteur 55 doit être supérieure à la largeur de l'objet 3 afin que ce dernier ait suffisamment de place pour se placer.

Ce type de plateau 15 permet en outre d'exploiter les phénomènes de basculement par chute et par remontée sur marche.

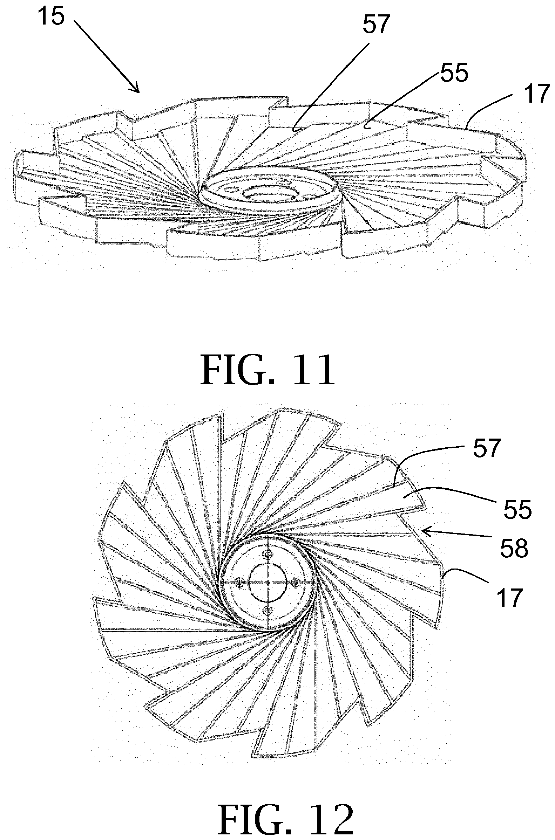

Les figures 11 et 12 ont trait à un cinquième mode de réalisation du plateau 15 qui se différencie de celui des figures 9 et 10 par deux aspects.

Le premier aspect concerne le fait que les rayons des secteurs circulaires 55 partent de façon tangentielle du bord circulaire interne 25.

Le deuxième aspect qui peut être présent sur un plateau 15 seul ou en combinaison avec le premier aspect, concerne le fait que le plateau 15 comprend au niveau du bord périphérique 17 des obstacles 58 de hauteur plus importante que la hauteur des objets 3 pour permettre de donner une inclinaison par rapport au rayon vu de dessus lors de la phase de centrifugation préalable à la phase de vibration aux objets allongés. Selon l'exemple des figures 11 et 12, ces obstacles 58 sont formés par des déformations du bord périphérique 17 en direction du centre 21.

Ce mode de réalisation est intéressant pour des objets 3 dont la longueur est plus importante que le rayon du plateau 15 ce qui permet d'individualiser des objets long à diamètre identique de plateau procurant ainsi un gain d'encombrement du dispositif 1.

La figure 13 a trait à un sixième mode de réalisation du plateau 15.

Selon ce mode de réalisation, il s'agit d'un plateau 15 à nervures radiales 39 et sillons avec des obstacles 58 de hauteur plus importante que la hauteur des objets 3 pour permettre d'appliquer une inclinaison préalable aux objets allongés.

Dans le présent cas, il s'agit par exemple de petites parois radiales 59 disposé sur des crêtes d'une nervure 39 sur quatre par exemple.

Ce type de plateau 15 est plutôt destiné à des objets 3 allongés pour permettre plus facilement d'induire un mouvement de rotation aux objets 3, notamment à proximité du bord périphérique 17 afin de les placer plus rapidement dans les sillons 41.

La distance entre les parois radiales 59 est choisis inférieure à la longueur des objets 3 à individualiser.

On comprend donc que le dispositif est peu onéreux, fiable, polyvalent et peu bruyant de sorte qu'il convient parfaitement à individualiser des objets 3 de petite taille par exemple pour alimenter une machine de montage ou une machine d'inspection des objets 3.

## Revendications

1. Dispositif (1) d'individualisation d'objets (3) en vrac de petite taille comprenant :
- un plateau (15) de réception d'objets (3) en vrac, le plateau (15) comprenant un bord périphérique (17) de retenu et une surface de réception (19) qui est au niveau du bord plus élevé que vers le centre (21) du plateau (15), la surface de réception (19) du plateau (15) étant en pente du bord périphérique (17) vers le centre (21) du plateau (15) et présentant une structuration (23) d'orientation des objets,
- un moteur d'entraînement (29) du plateau (15) pour entraîner le plateau (15) d'une part en rotation pour déplacer les objets (3) par la force centrifuge en direction du bord périphérique (17) et d'autre part en vibration, et
- une unité (31) de préhension robotisée des objets (3) ainsi orientés.

2. Dispositif selon la revendication 1, **caractérisé en ce que** la structuration d'orientation (23) de la surface de réception (19) comprend des nervures radiales (39, 39A, 39B).

3. Dispositif selon la revendication 2, **caractérisé en ce que** les nervures radiales (39) présentent toutes le même profil de hauteur de crête.

4. Dispositif selon la revendication 2, **caractérisé en ce que** la surface de réception présente de façon régulière des nervures radiales principales (39A) et des nervures radiales secondaires (39B) prises entre deux nervures radiales principales (39A), les nervures radiales principales (39A) présentant au niveau du bord (17) une hauteur de crête plus importante que les nervures radiales secondaires (39B).

5. Dispositif selon la revendication 4, **caractérisé en ce que** deux nervures radiales secondaires (39B) sont pris entre deux nervures radiales principales (39A).

6. Dispositif selon l'une quelconque des revendications 2 à 5, **caractérisé en ce que** les nervures (39, 39A, 39B) présentent un profil triangulaire en section transversale.

7. Dispositif selon la revendication 1, **caractérisé en ce que** la structuration d'orientation (23) de la surface de réception (19) comprend une structure en gradins circulaires (51).

8. Dispositif selon la revendication 7, **caractérisé en ce que** la surface des gradins (52) est inclinée vers le centre (21) du plateau (15).

9. Dispositif selon la revendication 1, **caractérisé en ce que** la structuration d'orientation (23) de la surface de réception (19) comprend des secteurs circulaires (55) inclinés perpendiculairement à une direction radiale de sorte que deux secteurs adjacents (55) sont reliés par une marche radiale (57).

10. Dispositif selon l'une quelconque des revendications 1 à 9, **caractérisé en ce qu'**il comprend un bord circulaire interne (25) délimitant une zone centrale (27) destinée à la fixation du plateau à un axe de sortie du moteur d'entraînement (29) et ne recevant pas d'objet (3).

11. Dispositif selon les revendications 9 et 10 prises ensemble, **caractérisé en ce que** les rayons des secteurs circulaires (55) partent de façon tangentielle du bord circulaire interne (25).

12. Dispositif selon l'une quelconque des revendications 1 à 11, **caractérisé en ce que** l'unité (31) de préhension robotisée des objets comprend une caméra (33) et un bras robotisé linéaire (35) pouvant se déplacer d'une part le long d'un rayon du plateau et d'autre part perpendiculairement au plateau (15).

13. Installation d'alimentation d'une machine en objets de petite taille, **caractérisé en ce qu'**elle comprend un dispositif (1) selon l'une quelconque des revendications 1 à 12.

14. Procédé d'individualisation d'objets en vrac de petite taille au moyen d'un dispositif (1) selon l'une quelconque des revendications 1 à 12, comprenant les étapes suivantes :
- on dépose les objets (3) de taille millimétrique en vrac sur le plateau (15),
- on applique au plateau (15) d'une part une rotation pour déplacer les objets (3) par la force centrifuge en direction du bord périphérique (17) et d'autre part une vibration au plateau (15) pour placer et orienter les objets au moyen de la structuration d'orientation (23) des objets de la surface de réception (19),
- on saisit les objets (3) ainsi orientés au moyen de l'unité de préhension robotisée (31).

15. Procédé d'individualisation d'objets en vrac selon la revendication 14, **caractérisé en ce que** l'on applique une vibration asymétrique au plateau (15).

## Patentansprüche

1. Vorrichtung (1) zur Trennung von kleinen losen Objekten (3), umfassend:
- eine Platte (15) zur Aufnahme von losen Objekten (3), wobei die Platte (15) einen peripheren Halterand (17) und eine Aufnahmefläche (19) umfasst, die sich im Bereich des Randes befindet, der höher als zur Mitte (21) der Platte (15) ist, wobei die Aufnahmefläche (19) der Platte (15) vom peripheren Rand (17) zur Mitte (21) der Platte (15) geneigt ist und eine Lenkungsstruktur (23) der Objekte aufweist,
- einen Antriebsmotor (29) der Platte (15), um die Platte (15) zum einen rotierend, um die Objekte (3) durch die Zentrifugalkraft in Richtung des peripheren Randes (17) zu bewegen, und zum anderen vibrierend anzutreiben, und
- eine robotergestützte Greifeinheit (31) der derart gelenkten Objekte (3).

2. Vorrichtung nach Anspruch 1, **dadurch gekennzeichnet, dass** die Lenkungsstruktur (23) der Aufnahmefläche (19) radiale Rippen (39, 39A, 39B) umfasst.

3. Vorrichtung nach Anspruch 2, **dadurch gekennzeichnet, dass** die radialen Rippen (39) alle dasselbe Grathöhenprofil aufweisen.

4. Vorrichtung nach Anspruch 2, **dadurch gekennzeichnet, dass** die Aufnahmefläche regelmäßig radiale Hauptrippen (39A) und radiale sekundäre Rippen (39B) zwischen zwei radialen Hauptrippen (39A) aufweist, wobei die radialen Hauptrippen (39A) im Bereich des Randes (17) eine höhere Grathöhe als die radialen sekundären Rippen (39B) aufweisen.

5. Vorrichtung nach Anspruch 4, **dadurch gekennzeichnet, dass** zwei radiale sekundäre Rippen (39B) zwischen zwei radialen Hauptrippen (39A) sind.

6. Vorrichtung nach einem der Ansprüche 2 bis 5, **dadurch gekennzeichnet, dass** die Rippen (39, 39A, 39B) im Querschnitt ein dreieckiges Profil aufweisen.

7. Vorrichtung nach Anspruch 1, **dadurch gekennzeichnet, dass** die Lenkungsstruktur (23) der Aufnahmefläche (19) eine kreisförmige Rangstruktur (51) umfasst.

8. Vorrichtung nach Anspruch 7, **dadurch gekennzeichnet, dass** die Oberfläche der Ränge (52) zur Mitte (21) der Platte (15) geneigt ist.

9. Vorrichtung nach Anspruch 1, **dadurch gekennzeichnet, dass** die Lenkungsstruktur (23) der Aufnahmefläche (19) kreisförmige Sektoren (55) umfasst, die senkrecht in einer radialen Richtung derart geneigt sind, dass zwei benachbarte Sektoren (55) durch eine radiale Stufe (57) verbunden sind.

10. Vorrichtung nach einem der Ansprüche 1 bis 9, **dadurch gekennzeichnet, dass** sie einen inneren kreisförmigen Rand (25) umfasst, der einen mittigen Bereich (27) begrenzt, der zur Befestigung der Platte an einer Ausgangsachse des Antriebsmotors (29) bestimmt ist und kein Objekt (3) aufnimmt.

11. Vorrichtung nach den Ansprüchen 9 und 10, gemeinsam herangezogen, **dadurch gekennzeichnet, dass** die Radien der kreisförmigen Sektoren (55) tangential vom inneren kreisförmigen Rand (25) ausgehen.

12. Vorrichtung nach einem der Ansprüche 1 bis 11, **dadurch gekennzeichnet, dass** die robotergestützte Greifeinheit (31) der Objekte eine Kamera (33) und einen linearen robotergestützten Arm (35) umfasst, der sich zum einen entlang eines Radius der Platte und zum anderen senkrecht zur Platte (15) bewegen kann.

13. Anlage zur Versorgung einer Maschine mit kleinen Objekten, **dadurch gekennzeichnet, dass** sie eine Vorrichtung (1) nach einem der Ansprüche 1 bis 12 umfasst.

14. Verfahren zur Trennung von losen kleinen Objekten mittels einer Vorrichtung (1) nach einem der Ansprüche 1 bis 12, umfassend die folgenden Schritte:
- Ablegen der losen millimetergroßen Objekte (3) auf der Platte (15),
- Anwenden, auf die Platte (15), zum einen einer Rotation, um die Objekte (3) durch die Zentrifugalkraft in Richtung des peripheren Randes (17) zu bewegen und zum anderen einer Vibration auf die Platte (15), um die Objekte mittels der Lenkungsstruktur (23) der Objekte der Aufnahmefläche (19) zu platzieren und auszurichten,
- Ergreifen der derart ausgerichteten Objekte (3) mittels der robotergestützten Greifeinheit (31).

15. Verfahren zur Trennung von losen Objekten nach Anspruch 14, **dadurch gekennzeichnet, dass** auf die Platte (15) eine asymmetrische Vibration angewendet wird.

## Claims

1. Device (1) for individualizing small loose objects (3), comprising:
- a plate (15) for receiving loose objects (3), the plate (15) comprising a peripheral retaining rim (17) and a receiving surface (19) that is higher at the rim than towards the centre (21) of the plate (15), the receiving surface (19) of the plate (15) sloping from the peripheral rim (17) towards the centre (21) of the plate (15) and having a structure (23) for orienting the objects,
- a drive motor (29) for the plate (15) for driving the plate (15) both in rotation, in order to move the objects (3) in the direction of the peripheral rim (17) by way of the centrifugal force, and also in vibration, and
- a robotic gripping unit (31) for gripping the objects (3) thus oriented.

2. Device according to Claim 1, **characterized in that** the orienting structure (23) of the receiving surface (19) comprises radial ribs (39, 39A, 39B).

3. Device according to Claim 2, **characterized in that** the radial ribs (39) all have the same crest height profile.

4. Device according to Claim 2, **characterized in that** the receiving surface has, in a regular manner, main radial ribs (39A) and secondary radial ribs (39B) located between two main radial ribs (39A), the main radial ribs (39A) having, at the rim (17), a crest height greater than the secondary radial ribs (39B).

5. Device according to Claim 4, **characterized in that** two secondary radial ribs (39B) are located between two main radial ribs (39A).

6. Device according to any one of Claims 2 to 5, **characterized in that** the ribs (39, 39A, 39B) have a triangular profile in cross section.

7. Device according to Claim 1, **characterized in that** the orienting structure (23) of the receiving surface (19) comprises a structure made up of circular tiers (51).

8. Device according to Claim 7, **characterized in that** the surface (52) of the tiers is inclined towards the centre (21) of the plate (15).

9. Device according to Claim 1, **characterized in that** the orienting structure (23) of the receiving surface (19) comprises circular sectors (55) that are inclined perpendicularly to a radial direction such that two adjacent sectors (55) are connected by a radial step (57).

10. Device according to any one of Claims 1 to 9, **characterized in that** it comprises an internal circular rim (25) delimiting a central zone (27) that is intended to fasten the plate to an output shaft of the drive motor (29) and does not receive objects (3).

11. Device according to Claims 9 and 10 together, **characterized in that** the radii of the circular sectors (55) extend tangentially from the internal circular rim (25).

12. Device according to any one of Claims 1 to 11, **characterized in that** the robotic gripping unit (31) for gripping the objects comprises a camera (33) and a linear robot arm (35) that can move both along a radius of the plate and perpendicularly to the plate (15).

13. Installation for feeding a machine with small objects, **characterized in that** it comprises a device (1) according to any one of claims 1 to 12.

14. Method for individualizing small loose objects by means of a device (1) according to any one of claims 1 to 12, comprising the following steps:
- the millimetre-size objects (3) are deposited loose on the plate (15),
- both a rotation is applied to the plate (15) in order to move the objects (3) in the direction of the peripheral rim (17) by way of the centrifugal force and a vibration is applied to the plate (15) in order to place and orient the objects by means of the structure (23) for orienting the objects on the receiving surface (19),
- the objects (3) thus oriented are grasped by means of the robotic gripping unit (31).

15. Method for individualizing loose objects according to Claim 14, **characterized in that** an asymmetric vibration is applied to the plate (15).
